Europäisches Patentamt

European Patent Office

Office européen des brevets

(19)

(11) Numéro de publication: **0 229 093**
**B1**

(12) **FASCICULE DE BREVET EUROPÉEN**

(45) Date de publication du fascicule du brevet:
**04.10.89**

(21) Numéro de dépôt: **86903438.9**

(22) Date de dépôt: **20.06.86**

(86) Numéro de dépôt international:
**PCT/FR 86/00215**

(87) Numéro de publication internationale:
**WO 87/00546 (29.01.87 Gazette 87/03)**

(51) Int. Cl.⁴: **C 10 G 9/20,** C 10 G 9/00,
B 01 J 19/24

(54) **PROCEDE DE VAPOCRAQUAGE D'HYDROCARBURES.**

(30) Priorité: **12.07.85 FR 8510853**

(43) Date de publication de la demande:
**22.07.87 Bulletin 87/30**

(45) Mention de la délivrance du brevet:
**04.10.89 Bulletin 89/40**

(84) Etats contractants désignés:
**BE DE GB IT NL**

(56) Documents cité:

(73) Titulaire: **INSTITUT FRANCAIS DU PETROLE, 4,
Avenue de Bois- Préau, F-92502 Rueil- Malmaison
(FR)**

(72) Inventeur: **ALAGY, Jacques, 24, chemin
Beckensteiner, F-69260 Charbonnières (FR)**
Inventeur: **BUSSON, Christian, 11, chemin du
Cogny, F-69570 Dardilly (FR)**
Inventeur: **CHAVEROT, Pierre, c/o Mr. King Gayle,
113, East LawrinAvenue, Terre Haute, IN 47803
(US)**

LIBER, STOCKHOLM 1989

## Description

L'invention concerne un procédé amélioré de vapocraquage d'hydrocarbures destiné à produire des oléfines légères, et plus particulièrement de l'éthylène et du propylène.

Le vapocraquage est apparu dès 1920 pour produire de l'éthylène à partir d'éthane, et est devenu rapidement un procédé de base de la pétrochimie, utilisant des charges de plus en plus lourdes, allant jusqu'au traitement de gazoles sous vide.

Son principe est basé sur l'instabilité à température élevée des paraffines et des naphtènes comparativement à celle des oléfines et des aromatiques. Les réactions principales sont la rupture d'une liaison C - C par un mécanisme de rupture homolytique pour conduire à une oléfine et à une paraffine, et la deshydrogénation. Ces deux réactions sont endothermiques, et donc favorisées par une élévation de la température; elles provoquent par ailleurs une augmentation du nombre de molécules, ce qui fait qu'elles sont favorisées par de faibles pressions partielles des hydrocarbures à traiter; c'est la raison pour laquelle cette pression est réduite au maximum par addition de vapeur d'eau au milieu réactionnel.

Cependant, on a rapidement remarqué que le maintien d'une charge hydrocarbonée à une température supérieure à 800°C pendant une durée de l'ordre de quelques dixièmes de secondes conduisait à la formation rapide de dépôts de coke, qui est préjudiciable à plusieurs titres: diminution du transfert thermique entre le réacteur et la charge à craquer, élévation importante de la température, de peau du réacteur, diminution du diamètre utile du réacteur entraînant une augmentation de la perte de charge à l'intérieur du réacteur, ce qui conduit à l'arrêt de l'unité pour procéder à une opération de décokage.

La formation du coke est dûe à des réactions secondaires telles que la formation d'hydrocarbures aromatiques polycycliques condensés, ainsi qu'à la polymérisation des oléfines formées. Cette dernière réaction provient de la tendance que présentent les oléfines à se polymériser lorsque la température est de l'ordre de 500 à 600°C; aussi est on amené, pour diminuer l'importance de cette réaction secondaire, à procéder à un refroidissement rapide (souvent nommé "trempe") des effluents de la réaction de façon à les amener rapidement de la température où s'effectue la pyrolyse à une température inférieure à 500°C, généralement grâce à un échangeur indirect de chaleur.

On a de plus remarqué que la polymérisation des oléfines était favorisée par la présence de nickel à la surface des parois métalliques de l'échangeur de chaleur, qui agit comme un catalyseur hétérogène de polymérisation (M. DENTE et coll., "Fouling of Transferline Exchangers in Ethylene Plants", AICHE Meeting de Houston, Texas, 30 mars 1983).

Les études thermodynamiques et cinétiques des réactions de pyrolyse d'hydrocarbures conduisent donc, afin d'augmenter la sélectivité de la réaction vers la production d'oléfines, à intervenir sur les paramètres suivants:

- augmentation rapide de la température de la charge jusqu'à la température optimale de pyrolyse pour une charge donnée, et maintien de cette température la plus constante possible dans la zone réactionelle,
- diminution du temps de séjour de la charge dans la partie réactionnelle,
- diminution de la pression partielle de la charge hydrocarbonée,
- trempe rapide et efficace des effluents de la réaction.

Sur le plan de la technologie, ces impératifs ont rapidement conduit à un schéma général de procédé consistant en :

a) un préchauffage de la charge, diluée par de la vapeur d'eau,
b) un chauffage à haute température de ce mélange dans des fours tubulaires afin de limiter le temps de séjour des hydrocarbures au cours de cette phase de pyrolyse,
c) une trempe rapide des effluents de réaction.

L'évolution de la technologie a essentiellement porté sur les phases de pyrolyse (b) et de trempe (c), pour tenter de satisfaire aux impératifs cités ci-dessus et à la diversité des charges à traiter, qui s'étendent à l'heure actuelle de l'éthane aux gazoles sous vide.

L'évolution des fours de vapocraquage a essentiellement été axée vers l'obtention de temps de séjour plus réduits et de diminution de la perte de charge, ce qui a conduit les constructeurs à réduire la longueur des réacteurs tubulaires, donc à augmenter la densité de flux thermique.

L'accroissement de ce dernier facteur peut être essentiellement obtenu en augmentant la température de peau des réacteurs tubulaires et/ou en diminuant le diamètre des tubes (ce qui permet d'augmenter le rapport s/v, s étant la surface d'échange et v le volume réactionnel).

Les progrès réalisés en métallurgie sur des alliages spéciaux résistant à des températures de plus en plus élevées (INCOLOY 800H, HK 40, HP40 par exemple) ont permis aux constructeurs de fours de pyrolyse pour vapocraquage d'augmenter les températures de fonctionnement de ces fours tubulaires, les limites actuelles de la métallurgie étant situées vers 1100°C.

Par ailleurs, la technique a également évolué vers l'utilisation de tubes de diamètre plus réduit, placés en parallèle afin de maintenir une capacité satisfaisante, et de rester dans un domaine de perte de charge convenable.

2

On a également proposé plusieurs modèles de fours de pyrolyse, tendant tous à augmenter la densité de flux thermique vers le début du tube de pyrolyse et à la réduire par la suite, soit en utilisant des réacteurs tubulaires de diamètre croissant, soit en rassemblant au moins deux tubes de pyrolyse en un seul après une certaine longueur de zone réactionnelle (voir par exemple F. Wall et coll. Chemical Engineering Progress, Décembre 1983, p. 50 - 55) ; on a également décrit des fours tubulaires non cylindriques, tendant à augmenter le rapport s/v; c'est ainsi que le brevet US-3 572 999 utilise des tubes de section ovale et que le brevet US-3 964 873 revendique des tubes de pyrolyse dont la section est en forme d'haltère.

C'est ainsi que la technologie des réacteurs de vapocraquage a évolué, depuis l'utilisation de tubes horizontaux de 100 m de long environ et de diamètres intérieurs de l'ordre de 90 à 140 mm, jusqu'à la technique "classique" de tubes suspendus verticalement de 40 m de long environ et de diamètres de l'ordre de 60 mm fonctionnant avec des temps de résidence de l'ordre de 0,3 à 0,4 s, et enfin la technique dite "milliseconde" proposée par PULLMAN - KELLOG (brevet US-3 671 198) qui utilise des tubes de 10 m environ de longueur, verticaux et rectilignes, de diamètre intérieur de 25 à 35 mm, ces tubes étant portés à des températures de l'ordre de i 100°C (température limite d'utilisation du métal). Le temps de résidence des charges est, dans ce type de four, de l'ordre de 0,07 s; la perte de charge observée est de l'ordre de 0,9 à 1,8 bar, et le calcul du rapport de la surface d'échange s au volume réactionnel v conduit à des valeurs de l'ordre de 120 m$^{-1}$.

En ce qui concerne la trempe des produits de réaction effluents, la technologie s'est orientée vers des échangeurs de température disposés sur les lignes de transfert des effluents de la réaction de pyrolyse. De nombreux échangeurs de ce type (souvent nommés "TLX", "transfer-line exchanger") ont été décrits dans l'art antérieur, comme par exemple dans le brevet US-4 097 544 ou dans l'ouvrage de L. KNIEL, O. WINTER et K. STORK, "Ethylene Keystone to the Petrochemical Industry", M. DEKKER, New York 1980, p. 137 à 142.

Le but de ces échangeurs est de réaliser le plus rapidement possible l'abaissement brutal des gaz effluents des réacteurs de pyrolyse à des températures auxquelles les réactions secondaires du type polymérisation d'oléfines ne se produisent pas.

Cependant, la température à laquelle est porté l'effluent à la sortie de l'échangeur de trempe varie en fonction de la charge vapocraquée. Par exemple, lorsque l'on traite des gazoles sous vide à caractère aromatique, il se trouve, parmi les effluents de vapocraquage une quantité assez importante de fuel-oils polyaromatiques condensés qui ne peuvent être refroidis brutalement à basse température sans que celà ne produise un encrassement excessif de l'échangeur, susceptible de limiter la durée de marche du four. Dans ce cas particulier, on préfère généralement procéder au refroidissement en deux étapes, la première étant effectuée par trempe indirecte dans l'échangeur de trempe jusqu'à une température de l'ordre de 450 - 500°C, la seconde étape étant constituée par un refroidissement direct par introduction de liquides froids dans les effluents de l'échangeur.

Les constructeurs d'échangeurs de type "TLX" se sont efforcés de réduire le volume mort existant entre les sorties des réacteurs tubulaires et les entrées des effluents dans l'échangeur de trempe, qui est généralement formé de deux ou trois tubes concentriques afin d'augmenter les surfaces d'échange.

C'est ainsi que le brevet US-4 457 364 décrit un échangeur de type TLX qui comprend un connecteur distributeur des gaz effluents dans lequel un tube du réacteur correspond à deux tubes du réacteur d'échange; cependant ce connecteur n'élimine pas entièrement les problèmes de volume mort entre réacteur et échangeur de trempe.

Cependant, aucune des techniques décrites pour procéder au vapocraquage d'hydrocarbures n'est pleinement satisfaisante; en particulier, aucune ne permet de dépasser une température de réacteur de 1100°C environ et donc de porter excessivement rapidement les charges à des températures où le craquage thermique s'effectue dans de bonnes conditions. De plus, il est connu que l'apport calorifique maximum doit être réalisé dans la zone du réacteur tubulaire où se produisent les réactions endothermiques de craquage des liaisons C - C et de déshydrogénation, ce qui n'est pas effectué de façon satisfaisante dans les procédés existants.

Par ailleurs, la nécessité de maintenir un flux thermique élevé a conduit à la diminution de la section des tubes de pyrolyse, ce qui impose une diminution de leur longueur si l'on veut conserver une perte de charge acceptable. De plus, aucun des procédés actuels ne permet d'obtenir une température approximativement constante tout au long de la zone réactionnelle; d'autre part, l'hétérogénéité des flux thermiques entraîne des écarts de température importants à la circonférence de chaque tube.

Enfin, les systèmes d'échangeurs de chaleur de type TLX présentent deux inconvénients majeurs; ils possèdent un volume mort non négligeable, ce qui est préjudiciable à une trempe rapide, et ils sont construits en aciers réfractaires, contenant du nickel, qui est, comme on l'a déjà mentionné, un catalyseur de polymérisation des oléfines.

L'objet de la présente invention est de proposer un procédé remédiant à ces divers inconvénients et permettant le vapocraquage d'un hydrocarbure - ou d'un mélange d'hydrocarbures - comprenant au moins deux atomes de carbone, conduisant à des rendements améliorés en éthylène et en propylène par rapport aux procédés existants.

Le procédé de l'invention est caractérisé en ce que l'on fait circuler un mélange dudit hydrocarbure et de vapeur d'eau dans une zone continue constituée d'une pluralité de canaux en matière céramique formant deux groupes, chaque canal du premier groupe étant en relation d'échange thermique avec au moins un canal du second groupe, les canaux du premier groupe s'étendant sur toute la longueur de ladite zone continue et étant parcourus par ledit mélange, les canaux du second groupe étant divisés en deux sections successives non-communicantes par un cloisonnement intermédiaire et étant alimentés par un fluide de chauffage dans leur première section (côté alimentation du mélange) et par un fluide de refroidissement dans leur seconde section (côté sortie du mélange), lesdites première et seconde section constituant respectivement une zone de pyrolyse et une zone de trempe, l'alimentation et le soutirage du fluide de chauffage s'effectuant perpendiculairement à l'axe des canaux de la première section, ladite alimentation étant effectuée en un point intermédiaire de la première section à une distance du début de ladite première section (côté alimentation du mélange) représentant 5 à 50 % de la longueur totale de la première section, et ledit soutirage étant effectué en partie en amont et en partie en aval dudit point intermédiaire.

Dans l'arrangement ci-dessus, les canaux sont de préférence rectilignes et parallèles entre eux, et à chaque canal de la zone de pyrolyse correspond un canal de la zone de trempe.

Dans un premier mode de réalisation, chaque canal d'un groupe est entouré de canaux de l'autre groupe sur toutes ses faces.

Dans un mode de réalisation préféré, les canaux de chaque groupe sont disposés par rangées, les canaux étant de section quelconque mais avantageusement polygonale et préférentiellement carrée ou rectangulaire, l'arrangement étant conçu de telle façon que les rangées de canaux d'ordre ... n - 2, n, n + 2, n + 4, ... soient parcourues par la charge à traiter et que les autres rangées de canaux d'ordre ...n - 1, n + 1, n + 3, ... soient parcourues par des fluides caloporteurs sur une première partie de leur longueur et par des fluides réfrigérants sur une partie subséquente de leur longueur, n étant un nombre quelconque.

Peu importe le fluide choisi pour la première et la dernière rangée, l'essentiel étant de respecter l'alternance entre rangées.

Les rangées de canaux parcourus par la charge sont continues sur la longueur totale du système. Les autres rangées de canaux sont fractionnées en deux parties successives par un cloisonnement en un point intermédiaire de leur longueur, de façon à définir deux zones, les canaux de la première zone (dans le sens d'écoulement de la charge à traiter) étant parcourus par un fluide caloporteur, déterminant ainsi une zone de pyrolyse ou zone réactionnelle, les canaux de la deuxième zone étant parcourus par un fluide réfrigérant déterminant ainsi une zone de refroidissement, ou zone de trempe.

Le système ainsi obtenu constitue donc un ensemble continu réacteur de pyrolyse et échangeur de trempe.

Dans la réalisation préférentielle de l'invention, l'arrivée du fluide caloporteur dans les rangées de canaux destinés à le véhiculer s'effectue sensiblement perpendiculairement à l'axe de ces rangées de canaux, au moyen d'une ou plusieurs ouvertures pratiquées dans la paroi externe des canaux concernés situés à la périphérie, et les canaux d'une même rangée sont mis en communication au niveau de l'arrivée du fluide caloporteur par des ouvertures pratiquées dans leurs parois latérales, de façon à ce que la totalité des canaux destinés à cet usage soit parcourue par le fluide caloporteur.

De préférence, l'arrivée du fluide caloporteur dans la zone de pyrolyse s'effectue en un point intermédiaire de cette zone, situé à une distance du début de cette zone (le début étant déterminé par l'endroit d'introduction de la charge) représentant 5 à 50 % de la longueur totale de cette zone, et plus préférentiellement 20 à 40 % de la longueur totale de cette zone; de cette façon, l'apport maximum de chaleur peut être transmis aux canaux parcourus par la charge à l'endroit où se produisent les réactions endothermiques de craquage et de déshydrogénation. Dans ce cas le fluide caloporteur est soutiré à la fois en tête et en queue de la zone de pyrolyse. Il est avantageux que 5 à 40 % (de préférence 20 à 35 %) du fluide de chauffage soit soutiré en tête et le complément à 100 % soit soutiré en queue.

Le nombre total de rangées de canaux n'est pas déterminant dans le procédé; il est évidemment fonction de la dimension de l'ensemble réacteur de pyrolyse-échangeur de trempe et des dimensions d'un canal unitaire. Cependant, les deux rangées de canaux extérieures sont, dans le cadre de l'invention, de préférence parcourues par les fluides caloporteurs ou réfrigérants.

Le nombre de canaux unitaires par rangée n'est pas non plus déterminant et est fonction de la dimension globale de l'ensemble et de la dimension d'un canal unitaire.

Un canal unitaire présente une section avantageusement comprise entre 9 et 900 mm$^2$ et préférentiellement comprise entre 25 et 100 mm$^2$; la longueur d'un canal unitaire peut être variable suivant les charges à traiter, la température du procédé, le temps de contact désiré et la température à laquelle on effectue la trempe. La longueur totale d'un canal unitaire - comprenant zone de pyrolyse et zone de trempe - est généralement comprise entre 2 et 15 m et, de préférence, entre 5 et 10 m.

Dans un mode particulier de réalisation du procédé, chaque canal unitaire peut être subdivisé en une pluralité de canaux élémentaires plus petits.

Dans le cadre de l'invention, on peut réaliser l'ensemble continu réacteur de pyrolyse - échangeur de trempe soit sous forme d'un monobloc, soit encore par juxtaposition jointive d'éléments unitaires, de forme identique, qui sont assemblés entre eux par tout moyen adéquat, comme par exemple à l'aide de brides. L'utilisation de céramique, et plus particulièrement du carbure de silicium, matériau facilement extrudable, rend facile la mise en oeuvre de tels ensembles ou éléments d'ensembles.

Les charges à traiter ont un temps de résidence dans la zone réactionnelle compris entre 5 et 200 millisecondes, et plus avantageusement compris entre 30 et 50 millisecondes; la température des parois dans la zone réactionnelle peut être portée à une valeur maximale de l'ordre de 1500°C.

Toute céramique réfractaire résistant à des températures supérieure à 1150°C peut être utilisée dans le cadre de l'invention; le carbure de silicium, qui présente une bonne conductibilité thermique et qui est facilement mis en oeuvre par extrusion est la céramique préférentiellement utilisée. D'autres céramiques sont par exemple la mullite, l'alumine et la cordierite.

De nombreux échangeurs indirects de chaleur en céramique ont été décrits dans l'art antérieur; leur domaine d'utilisation concerne essentiellement les moteurs à turbine, où le matériau de l'échangeur doit résister à des températures de l'ordre de 1200 à 1400°C. On peut citer, par exemple, le brevet français 2 436 956, le brevet US-4 421 702, les demandes de brevets japonais 59 046 496 et 59 050 082, ainsi que les brevets français 2 414 988 et 2 436 958, addition du précédent), ce dernier brevet décrivant un procédé de fabrication d'un élément d'échange indirect de chaleur en matière céramique pouvant être avantageusement utilisé dans le cadre de l'invention, moyennant des aménagements.

Les avantages que présente l'invention par rapport aux procédé connus de vapocraquage sont nombreux:

- obtention d'une température de paroi dans la zone de pyrolyse pratiquement homogène,
- possibilité de fonctionner à des températures de parois atteignant 1200 à 1500°C, dépassant les limites de la métallurgie actuelle et permettant d'augmenter la densité de flux thermique et la température de mise en oeuvre de la réaction; ceci est particulièrement important dans le cas du craquage de l'éthane,
- augmentation du rapport s/v, s étant la surface d'échange et v le volume réactionnel; c'est ainsi que dans la technique dite "milliseconde" ce rapport est de l'ordre de 120 m$^{-1}$, alors que la technique de l'invention permet d'atterndre des valeurs au moins égales à 200 m$^{-1}$ et pouvant atterndre des valeurs de 1 000 m$^{-1}$,
- faible perte de charge à l'intérieur de la zone réactionelle, ne dépassant pas 0,5 bar,
- apport de chaleur maximum au niveau de la zone réactionnelle où se produisent les réactions fortement endothermiques, conduisant à un très faible gradient de température sur l'intégralité de la zone réactionnelle
- neutralité du matériau réfractaire vis à vis de la charge et des produits de pyrolyse: (Dans la zone réactionnelle, on a pu observer que les aciers réfractaires utilisés, qui contiennent du nickel, favorisaient la formation de coke. Le brevet français 2 472 035 propose, pour pallier cet inconvénient, l'utilisation de réacteurs pour pyrolyse d'hydrocarbures constitués par un acier réfractaire revêtu intérieurement d'une couche de divers composants inertes, parmi lesquels le carbure de silicium est cité; mais ce procédé est très difficile à mettre en oeuvre ne permet pas d'augmenter les températures de parois du réacteur, et, de surcroit, l'interface métal-céramique supporte mal des variations de température importantes. Dans la présente invention, la neutralité du matériau réfractaire utilisé dans la zone de pyrolyse permet de diminuer le cokage sans présenter d'inconvénients; il devient donc inutile de procéder à une passivation de la surface du réacteur, au début et/ou au cours d'une campagne d'utilisation, comme il est d'usage de le faire lorsqu'on utilise des réacteurs métalliques réfractaires. Dans la zone de trempe, on a déjà mentionné l'influence néfaste du nickel, catalyseur de polymérisation des oléfines formées; là encore, l'utilisation de réfractaire comme matériau dans la zone de trempe permet de diminuer d'une façon substantielle la formation de polyoléfines; il en résulte un moindre encrassement au niveau des canaux parcourus par les effluents; la perte de charge se trouve diminuée, le rendement en oléfines est accru et les durées des cycles opérationnels entre deux opérations de décokage sont augmentées,
- le carbure de silicium, qui est le matériau préférentiellement utilisé dans l'invention, présente une bonne résistance mécanique même porté à haute température, ce qui permet la mise en oeuvre de l'ensemble réacteur-échangeur de trempe en utilisant pour les parois séparant les canaux unitaires une faible épaisseur de matériau - de l'ordre du mm, cette caractéristique favorisant l'ensemble des échanges thermiques,
- la très bonne stabilité thermique du matériau utilisé offre des avantages importants lorsqu'il faut procéder à un décokage de l'appareillage; c'est ainsi que l'on peut décoker à la vapeur d'eau à très haute température, en continuant à envoyer un fluide caloporteur par les canaux prévus à cet effet, ou encore procéder à une oxydation, par exemple par l'air, en présence ou non de vapeur d'eau, jusqu'à des températures de parois pouvant atteindre 1300 à 1400°C.
- le matériau utilisé présente enfin une très bonne résistance à l'érosion, ce qui est un avantage important, surtout pendant les périodes de décokage: (Les charges hydrocarbonées utilisables dans le cadre de l'invention comprennent des hydrocarbures aliphatiques simples saturés, tel que l'éthane, des mélanges d'alcanes, ou des coupes pétrolières telles que les naphtas, les gazoles atmosphériques et les gazoles sous vide, ces derniers pouvant présenter un point final de distillation de l'ordre de 570°C. Les coupes pétrolières peuvent avoir, le cas échéant, subi un prétraitement tel que, par exemple, un hydrotraitement),
- le rapport pondéral de la vapeur d'eau de dilution à la charge hydrocarbonée varie suivant les charges à traiter; il peut être compris entre 0,2 et 1,5; généralement, le rapport utilisé est de l'ordre de 0,5 pour effectuer le vapocraquage de naphta et de l'ordre de 1 lorsque l'on utilise du gazole sous vide,
- les fluides caloporteurs utilisables dans la zone de pyrolyse peuvent être tous les fluides thermiquement stables à des températures de l'ordre de 1200 à 1500°C; on préfére utiliser des fumées de combustion de brûleurs, ou des gaz chauds de récupération provenant d'autres procédés,
- les fluides utilisables pour refroidir les effluents dans la zone de trempe peuvent être par exemple de l'air, seul ou en mélange avec des fumées de combustion, ou encore de la vapeur d'eau à basse température et sous basse pression.

L'invention sera mieux comprise par la description de quelques modes de réalisation, donnés à titre illustratif mais nullement limitatif, qui en sera faite ci-après à l'aide des figures annexées:

- la figure 1 représente un mode de réalisation du procédé de l'invention suivant une coupe longitudinale de l'ensemble réacteur-échangeur de trempe,

- la figure 2 représente une coupe d'un élément de l'ensemble de section rectangulaire comportant des canaux unitaires carrés,
- la figure 3 représente une perspective éclatée d'un module représentatif de la partie zone de pyrolyse, de section rectangulaire,
- la figure 4 représente une perspective d'un autre type de module.

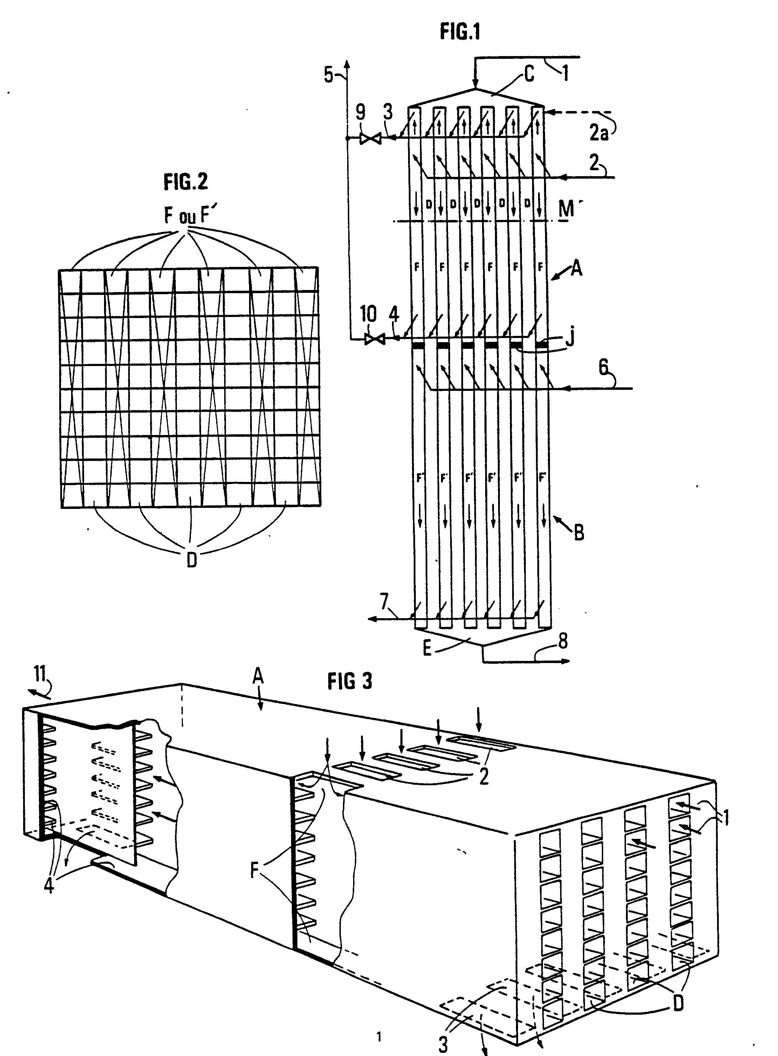

Sur la figure 1 on a représenté un ensemble multicanaux comprenant une zone de pyrolyse (A) et une zone de trempe (B). Le mélange constitué par la charge hydrocarbonée à traiter et par de la vapeur d'eau est préchauffé, de préférence par convection, dans une zone de préchauffage conventionnelle non portée sur la figure. A la sortie de cette zone de préchauffage, le mélange pénètre par la ligne (1) dans la zone de pyrolyse (A) où il est réparti au moyen du distributeur (C) dans la pluralité de canaux réactionnels (D).

La ligne pointillée (M) figure la moitié de la longueur de la zone de pyrolyse (A); la ligne (2) d'arrivée de fluide caloporteur dans la zone (A) est située entre (M) et (C) à une distance du début de la zone de pyrolyse (A) représentant 5 à 50 % de la longueur totale de cette zone; ce fluide caloporteur est préférentiellement constitué par des fumées de combustion provenant par exemple d'un brûleur non représenté sur la figure.

Ces fumées pénètrent dans la zone (A) et sont réparties dans la pluralité de canaux de chauffage figurés par (F); elles parcourent ces séries de canaux (F) à contre-courant du mélange réactionnel circulant dans les canaux (D) dans la partie de la zone (A) située entre l'arrivée de fumées (2) et leur sortie supérieure (3), et circulent à co-courant du mélange réactionnel entre l'arrivée (2) et la sortie inférieure de fumées (4).

Les lignes de sortie de fumées (3) et (4) comportent des systèmes de réglage de débit (9 et 10), comme, par exemple des vannes papillons, permettant de régler les débits respectifs des fumées entre les sorties (3) et (4).

Dans le cas le plus général décrit plus haut, les fumées sortant par les lignes (3) et (4) sont regroupées et renvoyées par la ligne (5) vers la zone de préchauffage par convection.

L'obturation des canaux (F) par des dispositifs d'obturation étanches (J) permet de délimiter les zones de pyrolyse (A) et de trempe (B). Le fluide de refroidissement pénètre préférentiellement dans la zone de trempe (B) par la ligne (6) située au tout début de l'échangeur, et circule dans les canaux (F') parallèles aux canaux (D), à co-courant des effluents réactionnels, et sort de l'échangeur par la ligne (7). On peut, le cas échéant, inverser le sens de circulation du fluide de refroidissement qui, dans ce cas, pénètre dans la zone d'échange (B) par la ligne (7) et, après avoir refroidi les effluents réactionnels à contre-courant, sort de (B) par la ligne (6).

Les effluents de la réaction ainsi refroidis sont collectés dans la zone (E) et recueillis par la ligne (8). Suivant la nature des charges traitées, ces effluents peuvent, si nécessaire, subir une seconde trempe par addition directe de fluide froid, suivant un procédé connu. Les traitements ultérieurs des effluents font partie de l'art antérieur et sortent du cadre de la présente invention.

La figure 2 représente une coupe d'un élément de réacteur de section rectangulaire comportant des canaux unitaires carrés.

Sur cette figure, les canaux réactionnels parcourus par la charge à traiter sont représentés par les rangées de canaux (D) tels que décrits dans la figure 1.

Les canaux parcourus par le fluide caloporteur sont représentés par les rangées hachurées de canaux (F) tels que décrits dans la figure 1.

La figure 3 représente une perspective éclatée d'un module de la partie zone de pyrolyse (A) de l'ensemble zone de pyrolyse - zone de trempe. Sur cette figure, pour des raisons de clarté, le distributeur de charge (C) décrit dans la figure 1 n'est pas représenté. Les désignations utilisées pour les divers éléments sont celles de la figure 1.

Dans cette figure, le cheminement de la charge à traiter est représenté par les flèches (1); la charge pénètre dans la zone de pyrolyse (A), est répartie dans la pluralité de canaux unitaires (D), et traverse longitudinalement la zone de pyrolyse (A) dans ces multicanaux (D) pour sortir de la zone (A) par ces mêmes multicanaux en (11); ces multicanaux D se continuent dans la zone de trempe non représentée sur la figure, qui se trouve immédiatement accolée à la zone (A).

Le cheminement suivi par le fluide caloporteur est représenté par les flèches situées face aux orifices (2); le fluide caloporteur pénètre dans (A) par les orifices (2) situés dans la première moitié de la zone (A); il est réparti dans la pluralité des canaux unitaires (F), une partie de ce fluide parcourt ces canaux à contre-courant de la charge circulant dans les canaux (D) et sort de (A) par les orifices (3); l'autre partie de ce fluide circule dans les canaux (F) à co-courant de la charge et sort de (A) par les orifices (4).

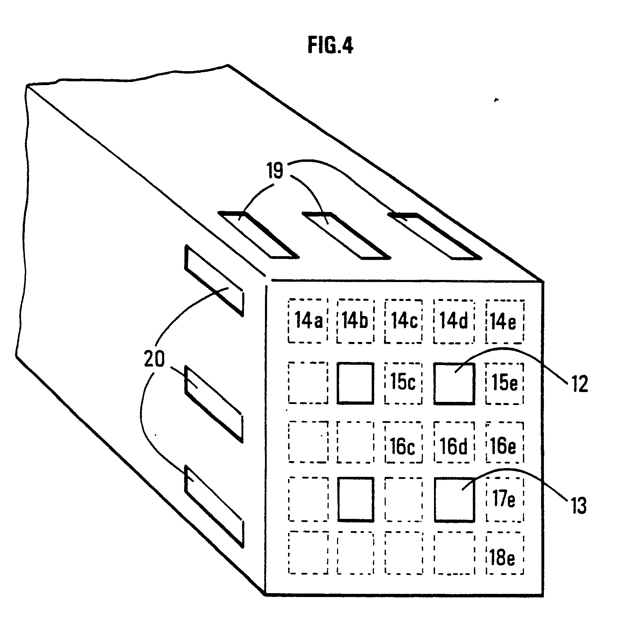

La figure 4 illustre le cas de canaux tels que 12 et 13, destinés au passage des réactifs et en contact sur leurs 4 faces avec des canaux pour le fluide de chauffage ou le fluide de trempe, tels que 14a...14e, 15c, 15e, 16c, 16d, et 16e. Dans ce cas, seuls les canaux dessinés en traits pleins sont ouverts à leur extrémité, tandis que les canaux dessinés en tirets sont fermés à leur extrémité. Le fluide de chauffage (ou de trempe) est introduit latéralement, de préférence sur deux côtés, par exemple par des ouvertures telles que 19 et 20. En face de ces ouvertures, une libre communication est établie entre les canaux. Ainsi face à l'ouverture 19, les canaux 14e, 15e, 16e, 17e et 18e communiquent ensemble tandis que face à l'ouverture 20, les canaux 14a, 14b, 14c, 14d et 14e communiquent ensemble.

On peut également n'alimenter en fluide de chauffage ou de trempe que sur une face, par exemple la face supérieure, tout en maintenant les communications internes entre les canaux indiquées plus haut. Dans ce cas il n'y a pas d'ouvertures latérales telles que 20.

Les exemples qui suivent servent à illustrer l'invention mais ne peuvent en aucun cas limiter sa portée.

## Exemple 1

Cet exemple concerne le vapocraquage d'un gazole sous vide dont la densité est d 20/4 = 0,9115 et qui présente un point initial d'ébullition de 271°C et un point final de 586°C.

Cette charge est préchauffée à 550°C après avoir été mélangée avec de la vapeur d'eau dans un rapport pondéral vapeur d'eau/charge égal à 1. Cette charge est craquée dans trois installations, l'une dite "conventionnelle" (A) composée de tubes cylindriques d'acier en épingles de 60 mm de diamètre intérieur et de 50 m de longueur; la seconde installation utilise un procédé "amélioré" (B) utilisant des tubes cylindriques d'acier rectilignes de 30 mm de diamètre intérieur et de 10 m de longueur; la troisième installation (C) est conforme à l'invention et comprend une zone de pyrolyse multicanaux, en carbure de silicium, chaque canal ayant une section carrée de 10 mm de côté et de 3 m de longueur. Ces trois installations fonctionnent de façon à avoir une température de l'effluent en fin de pyrolyse de 850°C. Dans l'installation C, le fluide de chauffage est introduit à 30 % de la longueur de la zone de pyrolyse; 25 % de ce fluide est soutiré en tête et 75 % en queue.

Les produits, effluents de pyrolyse sont refroidis dans le cas des installations (A) et (B) à l'aide d'échangeurs de trempe en matériau métallique, et l'échangeur de trempe (C) est conforme à l'invention, en carbure de silicium, de mêmes structure et dimension que la zone de pyrolyse multicanaux et accolé jointivement à celle-ci par l'intermédiaire d'une bride.

Dans l'échangeur C, tout le fluide de refroidissement (air) est introduit en tête et soutiré en queue. Dans ce qui précède, "tête" et "queue" correspond à une alimentation et à un soutirage latéral, en des points proches des extrémités de chaque structure, mais pas aux extrémités elles-mêmes où se font seulement l'alimentation et le soutirage des réactifs.

Le tableau suivant résume les principales conditions opératoires des trois types de vapocraqueurs, ainsi que les compositions pondérales des principales fractions obtenues.

| | PROCEDE "CONVENTIONNEL" (A) | PROCEDE "AMELIORE" (B) | PROCEDE DE L'INVENTION (C) |
|---|---|---|---|
| Temps de séjour en millisecondes | 220 | 70 | 30 |
| Perte de charge en bar | 7,2 | 1,8 | 0,05 |
| $\frac{s}{v}$ m$^{-1}$ | 67 | 133 | 400 |
| Méthane | 7,9 | 8,1 | 8,0 |
| Ethylène | 17,5 | 20,0 | 27,0 |
| Propylène | 10,8 | 10,9 | 10,8 |
| Butadiène | 3,5 | 3,0 | 5,2 |
| Coupe essence C$_5$+ | 31,3 | 30,1 | 27,8 |
| Coupe fuel-oil 200°C+ | 28 | 26,6 | 20,3 |

Comme on le voit d'après ces résultats, les trois procédés de vapocraquage, conduits à des degrés de sévérité similaires (teneur en méthane voisine de 8 %) donnent des résultats très différents, essentiellement en ce qui concerne les teneurs en éthylène et en coupe de point d'ébullition supérieur à 200 °C. En particulier, le procédé de l'invention permet d'obtenir 35 % d'éthylène de plus que le procédé (B) le plus performant.

**Exemple 1 bis**

On répète l'exemple 1 dans le cas où la zone de pyrolyse n'est pas jointive à la zone de trempe: un canal commun de 10 cm de longueur les réunit, ce canal ayant les mêmes dimensions extérieures que chacune des deux structures qu'il joint mais étant intérieurement démuni de canaux.

Dans ce cas, toutes choses égales par ailleurs, les rendements % sont les suivants:

méthane 8,0;
éthylène 22,0;
propylène 10,8;
butadiène 3,4; coupe essence $C_5^+$ + 29,1;
coupe fuel-oil 200°C+ 25,9.

**Exemple 1 ter**

On répète l'exemple 1 dans le cas où 100 % du fluide de chauffage est introduit en tête et 100 % est soutiré en queue, toutes choses égales par ailleurs.

Les rendements % sont:

méthane 8,0;
éthylène 24,1;
propylène 10,8;
butadiène 4,8;
coupe essence $C_5^+$ 28,2;
coupe fuel-oil 200°C+ 23,1.

On voit que les rendements en éthylène des exemples 1A et 1B sont sensiblement moins bons que dans l'exemple 1 (C).

**Exemple 2**

On procède au vapocraquage d'une charge de naphta de densité d 20/4 = 0,722 et dont l'intervalle d'ébullition est compris entre 40 et 173°C, sur l'installation "conventionnelle" (A) et sur l'installation (C) conforme au procédé de l'invention, telles que décrites dans l'exemple 1.

On préchauffe la charge à 600°C après l'avoir mélangée à de la vapeur d'eau dans un rapport pondéral vapeur d'eau/charge égal à 0,5. On procède de telle façon que les rendements en $CH_4$ soient égaux à 8 % dans les deux cas; le procédé conventionnel (A) fournit un rendement pondéral en éthylène de 28,2 % et le procédé (C) de l'invention 39,1 %; les rendements pondéraux en propylène sont respectivement de 13,2 % et 16,3 %.

Le procédé de l'invention permet donc d'obtenir l'ensemble éthylène-propylène avec un rendement amélioré de 33 % par rapport au procédé conventionnel.

**Exemple 3**

La charge utilisée dans cet exemple est de l'éthane qui est traité dans les vapocraqueurs (A) et (C) tels que définis dans les exemples précédents.

On porte la température de paroi des tubes du vapocraqueur (A) à 1100°C et celle du vapocraqueur (C) de l'invention à 1280°C. Dans ces conditions on obtient un rendement pondéral en éthylène de 48,0 % en utilisant le vapocraqueur (A) et 72,5 % en utilisant le procédé de l'invention.

**Revendications**

1. Procédé de vapocraquage d'un hydrocarbure renfermant au moins deux atomes de carbone, caractérisé en ce que l'on fait circuler un mélange dudit hydrocarbure et de vapeur d'eau dans une zone continue constituée d'une pluralité de canaux en matière céramique formant deux groupes, chaque canal du premier groupe étant en relation d'échange thermique avec au moins un canal du second groupe, les canaux du premier groupe s'étendant sur toute la longueur de ladite zone continue et étant parcourus par ledit mélange, les canaux du second groupe étant divisés en deux sections successives non-communicantes par un cloisonnement intermédiaire et étant alimentés par un fluide de chauffage dans leur première section (côté alimentation du mélange) et par un fluide de refroidissement dans leur seconde section (côté sortie du mélange), lesdites première et seconde section constituant respectivement une zone de pyrolyse et une zone de trempe, l'alimentation et le soutirage du fluide de chauffage s'effectuant perpendiculairement à l'axe des canaux de la première section, ladite alimentation étant effectuée en un point intermédiaire de la première section à une distance du début de ladite première section (côté alimentation du mélange) représentant 5 à 50 % de la longueur totale de la première section, et ledit soutirage étant effectué en partie en amont et en partie en aval dudit point intermédiaire.

2. Procédé selon la revendication 1 dans lequel le matériau réfractaire est le carbure de silicium.

3. Procédé selon la revendication 1 ou 2 dans lequel le fluide de refroidissement est introduit et soutiré perpendiculairement à l'axe des canaux de la seconde section.

4. Procédé selon l'une des revendications 1 à 3 dans lequel le point intermédiaire d'alimentation du fluide de chauffage est situé à une distance du début de la zone de pyrolyse représentant 20 à 40 % de la longueur de cette zone.

5. Procédé selon l'une des revendications 1 à 4 dans lequel le fluide de refroidissement circule dans la zone de trempe dans le même sens que le mélange d'hydrocarbure et de vapeur d'eau provenant de la zone de pyrolyse.

6. Procédé selon l'une des revendications 1 à 5 dans lequel la section d'un canal unitaire est comprise entre 9 et 900 mm$^2$.

7. Procédé selon l'une des revendications 1 à 6 dans lequel la section d'un canal unitaire est comprise entre 25 et 100 mm$^2$.

8. Procédé selon l'une des revendications 1 à 7 dans lequel 5 à 40 % du fluide de chauffage est soutiré en amont et 60 à 95 % est soutiré en aval du point intermédiaire d'alimentation.

9. Procédé selon l'une des revendications 1 à 8 dans lequel la zone continue comprend au moins deux éléments unitaires successifs distincts juxtaposés de manière jointive.

10. Procédé selon l'une des revendications 1 à 9 dans lequel la zone continue est constituée d'une pluralité de canaux juxtaposés formant des rangées de deux types différents en alternance, les rangées du premier type étant constituées exclusivement de canaux du premier groupe et les rangées du second type étant constituées exclusivement de canaux du second groupe.

**Patentansprüche**

1. Verfahren zum Dampfkracken eines wenigstens zwei Kohlenstoffatome enthaltenden Kohlenwasserstoffs, dadurch gekennzeichnet, daß man ein Gemisch dieses Kohlenwasserstoffs sowie Wasserdampfs in einer kontinuierlichen Zone zirkulieren läßt, die aus einer Vielzahl von aus keramischem Material bestehenden zwei Gruppen bildenden Kanälen gebildet ist, wobei jeder Kanal der ersten Gruppe in Wärmeaustauschbeziehung mit wenigstens einem Kanal der zweiten Gruppe steht, daß die Kanale der ersten Gruppe sich über die gesamte Länge dieser kontinuierlichen Zone erstrecken und von diesem Gemisch durchströmt werden, daß die Kanäle der zweiten Gruppe in zwei aufeinanderfolgende nicht in Verbindung stehende Abschnitte durch eine Zwischentrennwand unterteilt sind und durch ein Heizfluid in ihrem ersten Abschnitt (auf der Zuführungsseite des Gemisches) und durch ein Kühlfluid in ihrem zweiten Abschnitt (auf der Austrittsseite des Gemisches) gespeist werden, wobei der erste und zweite Abschnitt jeweils eine Pyrolysezone und eine Abschreck- bzw. Vergütungszone bilden, daß Zuführen und Absaugen des Heizfluids senkrecht zur Achse der Kanale des ersten Abschnitts erfolgen, wobei die Zuführung an einem Zwischenpunkt des ersten Abschnitts unter einem Abstand vom Beginn des ersten Abschnitts (auf der Zuführungsseite des Gemisches) durchgeführt wird, der 5 bis 50 % der Gesamtlänge des ersten Abschnitts bildet und dieses Abziehen oder Absaugen in Strömungsrichtung zum Teil vor, zum Teil hinter diesem Zwischenpunkt vorgenommen wird.

2. Verfahren nach Anspruch 1 dadurch gekennzeichnet, daß das feuerfeste Material Siliziumcarbid ist.

3. Verfahren nach Anspruch 1 oder 2, dadurch gekennzeichnet, daß das Kühlfluid senkrecht zur Achse der Kanale des zweiten Abschnitts eingeführt und abgezogen wird.

4. Verfahren nach einem der Ansprüche 1 bis 3, dadurch gekennzeichnet, daß der Zwischenpunkt der Zuführung des Heizfluids unter einem Abstand zum Beginn der Pyrolysezone angeordnet ist, der 20 bis 40 % der Länge dieser Zone beträgt.

5. Verfahren nach einem der Ansprüche 1 bis 4, dadurch gekennzeichnet, daß das Kühlfluid in der Abschreckzone in der gleichen Richtung wie das Gemisch aus Kohlenwasserstoff und Wasserdampf zirkuliert, das aus der Pyrolysezone stammt.

6. Verfahren nach einem der Ansprüche 1 bis 5, dadurch gekennzeichnet, daß der Querschnitt eines Einheitskanals zwischen 9 und 900 mm$^2$ ausmacht.

7. Verfahren nach einem der Ansprüche 1 bis 6, dadurch gekennzeichnet, daß der Querschnitt eines Einheitskanals zwischen 25 und 100 mm$^2$ beträgt.

8. Verfahren nach einem der Ansprüche 1 bis 5, dadurch gekennzeichnet, daß 5 bis 40 % des Heizfluids in Strömungsrichtung vor und 60 bis 95 % hinter dem Zwischenpunkt der Zuführung abgezogen wird.

9. Verfahren nach einem der Ansprüche 1 bis 8, dadurch gekennzeichnet, daß die kontinuierliche Zone wenigstens zwei aufeinanderfolgende unterschiedliche aneinanderstoßende nebeneinander angeordnete Elemente enthält.

9

10. Verfahren nach einem der Ansprüche 1 bis 9, dadurch gekennzeichnet, daß die kontinuierliche Zone gebildet wird aus einer Vielzahl von nebeneinander angeordneten Kanälen, welche zwei alternierend abwechselnde unterschiedliche Typen von Reihenanordnungen bilden, wobei die Reihenanordnungen des ersten Typs ausschließlich aus Kanälen der ersten Gruppe und die Reihenanordnungen des zweiten Typs ausschließlich aus Kanälen der zweiten Gruppe gebildet werden.

**Patentansprüche**

1. A method for steam-cracking a hydrocarbon containing at least two carbon atoms, characterized in that a mixture of said hydrocarbon and steam is circulated in a continuous zone consisting of a plurality of channels of ceramic material forming two groups, each channel of the first group being in heat exchange relationship with at least one channel of the second group, the channels of the first group extending over the entire length of said continuous zone and through which said mixture passes, the channels of the second group being divided into two successive non-communicating sections by an intermediate partition and being fed by a heating fluid in their first section (mixture feed side) and by a cooling fluid in their second section (mixture outlet side), said first and second section constituting respectively a pyrolysis zone and a quenching zone, the feed and draw off of the heating fluid taking place perpendicularly to the axis of the channels of the first section, said feed taking place at an intermediate point of the first section at a distance from the beginning of said first section (mixture feed side) representing 5 to 50 % of the total length of the first section, and said draw off taking place partly upstream and partly downstream of said intermediate point.

2. A method according to claim 1 in which the refractory material is silicon carbide.

3. A method according to either claim 1 or 2 in which the cooling fluid is introduced and drawn off perpendicularly to the axis of the channels of the second section.

4. A method according to any of the claims 1 to 3 in which the intermediate point of the heating fluid feed is located at a distance from the beginning of the pyrolysis zone representing 20 to 40 % of the length of this zone.

5. A method according to any of the claims 1 to 4 in which the cooling fluid circulates in the quenching zone in the same direction as the hydrocarbon and steam mixture coming from the pyrolysis zone.

6. A method according to any of the claims 1 to 5 in which the cross-section of a unit channel is between 9 and 900 mm$^2$.

7. A method according to any of the claims 1 to 6 in which the cross-section of a unit channel is between 25 and 100 mm$^2$.

8. A method according to any of the claims 1 to 7 in which 5 to 40 % of the heating fluid is drawn off upstream and 60 to 95 % is drawn off downstream of the intermediate feed point.

9. A method according to any of the claims 1 to 8 in which the continuous zone comprises at least two distinct successive unit elements placed side by side contiguously.

10. A method according to any of the claims 1 to 9 in which the continuous zone consists of a plurality of side by side channels forming two alternating rows of different types, the rows of the first type consisting exclusively of channels of the first group and the rows of the second type consisting exclusively of channels of the second group.

EP 0 229 093 B1

FIG.1

FIG.2

F ou F'

D

FIG 3

# FIG.4